# FASCICULE DE BREVET EUROPEEN

(11) **EP 2 616 983 B1**
(45) Date de publication et mention de la délivrance du brevet: **18.11.2015**
(21) Numéro de dépôt: 11773485.5
(22) Date de dépôt: 05.09.2011
(51) Int. Cl.: G06F 21/41

(54) **DISPOSITIF DE GESTION DE COMPTES UTILISATEURS APTE A COOPERER AVEC UN DISPOSITIF DE SIGNATURE UNIQUE**
BENUTZERKONTENVERWALTUNGSGERÄT WELCHES MIT EINEM SINGLE-SIGNON GERÄT ZUSAMMENARBEITEN KANN
USER ACCOUNT MANAGEMENT DEVICE THAT CAN CO-OPERATE WITH A SINGLE SIGN-ON DEVICE

(30) Priorité: 14.09.2010 FR 1057332
(43) Date de publication de la demande: 24.07.2013
(73) Titulaire: Evidian, 78340 Les Clayes sous Bois (FR)
(72) Inventeur: GALIANA, Denis Evidian, 78340 Les Clayes-Sous-Bois (FR); GALLON, Anne, 78220 Viroflay (FR); COURTAUX, Brigitte, 92500 Rueil-Malmaison (FR)
(74) Mandataire: Camus, Olivier Jean-Claude
(86) Numéro de dépôt international: PCT/FR2011/052028
(87) Numéro de publication internationale: WO 2012/035232

(56) Documents cités:
- US-A- 5 944 824
- US-A1- 2006 271 689
- US-A1- 2009 249 439

## Description

### DOMAINE TECHNIQUE DE L'INVENTION

La présente invention concerne un dispositif de gestion de comptes utilisateurs d'utilisateurs d'une pluralité d'applications.
Elle concerne également un procédé de gestion de comptes utilisateurs mis en oeuvre par ledit dispositif.
Elle concerne également un dispositif de signature unique.

Elle trouve une application particulière mais non limitative dans le domaine des de la sécurité des accès informatiques.

### ARRIERE-PLAN TECHNOLOGIQUE DE L'INVENTION

Dans le domaine de la sécurité des accès informatiques, un dispositif de gestion de comptes utilisateurs bien connu de l'homme du métier permet de gérer les comptes utilisateurs pour des applications existantes. Cette gestion des comptes utilisateurs pour les applications comprend :
- la création de comptes utilisateurs pour les applications, un compte utilisateur comprenant un identifiant et un mot de passe ; et
- l'association de droits à ces comptes utilisateurs.
L'identifiant et le mot de passe du compte utilisateur créé sont donnés à l'utilisateur concerné pour qu'il se connecte à l'application correspondante.

D'un autre côté, il existe des dispositifs de signature unique qui permettent à des utilisateurs d'une pluralité d'applications de s'authentifier une unique fois auprès dudit dispositif de signature unique, ce qui a pour conséquence de déclencher une authentification automatique des utilisateurs dans les applications par ledit dispositif de signature unique. Ces dispositifs permettent de gérer de façon sécurisée les accès aux différentes applications. En effet, ces dispositifs de signature unique peuvent mettre en oeuvre des moyens de contrôle des connexions aux différentes applications tels que le nombre de fois où une connexion s'effectue, une limitation des horaires de connexion, une limitation des postes de travail où un utilisateur peut se connecter etc.

Un inconvénient du dispositif de gestion de comptes utilisateurs de l'état de la technique antérieure, est qu'il permet aux utilisateurs d'accéder à tous leurs comptes utilisateurs et donc de connaître tous les mots de passe associés. Cette solution n'est pas sécuritaire car un utilisateur peut donner sont mot de passe à d'autres personnes, il peut également se connecter via n'importe quel poste utilisateur....

Par ailleurs, le document US2009/249439 décrit un système d'accès par signature unique à une pluralité de ressources, comprenant un dispositif de gestion de comptes utilisateurs et un dispositif de signature unique, et un procédé mis en oeuvre par le système. Le système permet à un utilisateur de s'authentifier une unique fois pour accéder à plusieurs ressources. Le dispositif de gestion de comptes utilisateurs comporte un serveur d'administration dont l'interface permet à un administrateur de définir des règles de gestion de la pluralité de ressources, en définissant notamment quelle ressource est accessible à tel utilisateur. Les règles de gestion sont ensuite transmises au dispositif de signature unique. De plus, le dispositif de gestion de comptes utilisateurs et le dispositif de signature unique ont accès à une base de référence utilisateurs commune. On note donc que le dispositif de gestion de comptes utilisateurs et le dispositif de signature unique sont interdépendants.

### DESCRIPTION GENERALE DE L'INVENTION

La présente invention a pour but un dispositif de gestion de comptes utilisateurs d'une pluralité d'applications qui permette de gérer les comptes utilisateurs tout en ayant les avantages d'un dispositif de signature unique.

Les objets de l'invention sont définis dans les revendications.

Selon un premier objet de l'invention, ce but est atteint par un dispositif de gestion de comptes utilisateurs d'utilisateurs d'une pluralité d'applications apte à coopérer avec au moins un dispositif de signature unique, ledit dispositif de signature unique étant apte à permettre l'accès à au moins une application pour au moins un utilisateur au moyen d'une authentification primaire, ledit dispositif de gestion comprenant :
- une unité de lecture primaire d'un annuaire d'identité comprenant des identifiants référents relatifs à des utilisateurs de la pluralité d'applications ;
- une unité de création primaire d'au moins un compte utilisateur pour une application ;
- une unité de mise en correspondance primaire du compte utilisateur créé avec l'identifiant référent dudit utilisateur pour lequel compte utilisateur a été créé ;
- une unité de détermination d'une base de référence utilisateurs utilisée par le dispositif de signature unique ;
- une unité de lecture secondaire d'une table de correspondance application comprenant les identifiants des applications qu'il provisionne et les références application correspondant des applications gérées par au moins un dispositif de signature unique ;
- une unité d'envoi audit dispositif de signature unique d'un message comprenant :
   - le compte utilisateur créé ;
   - une référence utilisateur du dispositif de signature unique correspondant au compte utilisateur créé ;
   - une référence application du dispositif de signature unique correspondant à l'application pour laquelle le compte utilisateur a été créé.

Comme on va le voir en détail par la suite, le fait d'interfacer les deux dispositifs permet un envoi d'un compte utilisateur directement au dispositif de signature unique et évite ainsi de transmettre les données dudit compte utilisateur à l'utilisateur concerné. Ce dernier est obligé de se connecter à une application via le dispositif de signature unique (car il ne connaît notamment pas le mot de passe d'accès à cette application).

Selon des modes de réalisation non limitatifs, le dispositif de gestion de droits peut comporter en outre une ou plusieurs caractéristiques supplémentaires parmi les suivantes :
- Le dispositif de gestion de comptes utilisateurs comporte en outre une unité de configuration d'un groupe d'utilisateurs de l'annuaire d'identité apte à indiquer :
   - quel est le dispositif de signature unique qui est associé à ce groupe d'utilisateurs ; et
   - quelle est la base de référence utilisateur qui est utilisée par ledit dispositif de signature unique, ladite base de référence utilisateur comprenant les références utilisateurs.
- L'unité d'identification est apte à interroger le dispositif de signature unique pour connaître la base de référence utilisateurs que ledit dispositif de signature unique utilise.
- Le dispositif de gestion de comptes utilisateurs comporte en outre une unité d'enregistrement de toute application utilisée par le dispositif de signature unique dans la table de correspondance application.
- Le dispositif de gestion de comptes utilisateurs comporte en outre une unité d'attribution de droits au compte utilisateur créé à partir d'un système de gestion de politique centralisée. Cela permet de gérer les droits des utilisateurs au sein des différentes applications à l'aide d'un outil unique.
- Le message comprend en outre des droits attribués au compte utilisateur créé pour définir le mode de fonctionnement du dispositif de signature unique pour ce compte utilisateur. Cela permet d'avoir un contrôle sur l'exécution du dispositif de signature unique par rapport à un compte utilisateur donné pour une application donnée.
- Le dispositif de gestion de comptes utilisateurs comporte en outre une unité de création des identifiants référents des utilisateurs de l'annuaire d'identité.
- Le dispositif de gestion de comptes utilisateurs comporte en outre une unité de synchronisation des identifiants référents des utilisateurs de l'annuaire d'identité à partir d'une source d'identité. Cela évite au dispositif de gestion de comptes utilisateurs de définir tous les utilisateurs dans son annuaire d'identité : l'unité de synchronisation va chercher la liste des utilisateurs dans des sources d'identité par exemple de l'entreprise (base de données des ressources humaines, base clients etc.). Ceci évite les erreurs de recopie et les désynchronisations.

Selon un deuxième objet de l'invention, elle concerne un procédé de gestion de comptes utilisateurs d'utilisateurs d'une pluralité d'applications comprenant les étapes de :
- lire un annuaire d'identité comprenant des identifiants référents relatifs à des utilisateurs de la pluralité d'applications ;
- créer au moins un compte utilisateur pour une application ;
- mettre en correspondance le compte utilisateur créé avec l'identifiant référent dudit utilisateur ;
- déterminer au moins une base de référence utilisateurs utilisée par au moins un dispositif de signature unique ;
- envoyer audit dispositif de signature unique un message comprenant :
   - le compte utilisateur créé ;
   - une référence utilisateur du dispositif de signature unique correspondant au compte utilisateur créé ;
   - une référence application du dispositif de signature unique correspondant à l'application pour laquelle le compte utilisateur a été créé.

Selon des modes de réalisation non limitatifs, le procédé de gestion de comptes utilisateurs peut comporter en outre une ou plusieurs caractéristiques supplémentaires parmi les suivantes :
- Le procédé de gestion de comptes utilisateurs comporte en outre une étape de configurer un groupe d'utilisateurs de l'annuaire d'identité en indiquant :
   - quel est le dispositif de signature unique qui est associé à ce groupe d'utilisateurs ; et
   - quelle est la base de référence utilisateur qui est utilisée par ledit dispositif de signature unique, ladite base de référence utilisateur comprenant les références utilisateurs.
- Le procédé de gestion de comptes utilisateurs comporte en outre une étape d'enregistrer toute application utilisée par le dispositif de signature unique dans la table de correspondance application.

Selon un troisième objet de l'invention, elle concerne un dispositif de signature unique étant apte à permettre l'accès à au moins une application pour au moins un utilisateur au moyen d'une authentification primaire et étant apte à coopérer avec un dispositif de gestion de comptes utilisateurs d'utilisateurs d'une pluralité d'applications, ledit dispositif de signature unique comprenant :
- une unité de création d'une authentification primaire pour chaque utilisateur enregistré dans une base de référence utilisateurs, ladite authentification primaire permettant l'accès à la pluralité d'applications ;
- une unité de lecture primaire de ladite base de référence utilisateurs comprenant des références utilisateurs relatives aux utilisateurs de la pluralité d'applications ;
- une unité de réception d'un message provenant du dispositif de gestion de comptes utilisateurs, ledit message comprenant :
   - un compte utilisateur créé par le dispositif de gestion de comptes utilisateurs pour une application donnée ;
   - une référence utilisateur du dispositif de signature unique correspondant au compte utilisateur créé ;
   - une référence application du dispositif de signature unique correspondant à l'application pour laquelle le compte utilisateur a été créé.
- une unité de mise en correspondance secondaire du compte utilisateur reçu avec la référence utilisateur reçue et pour l'application dont la référence application a été reçue.

Selon des modes de réalisation non limitatifs, le dispositif de signature unique peut comporter en outre une ou plusieurs caractéristiques supplémentaires parmi les suivantes :
- La base de référence utilisateurs est une base d'utilisateurs d'une application provisionnée par le dispositif de gestion de comptes utilisateurs.
- La base de référence utilisateurs est une source d'identités utilisée comme source pour un annuaire d'identité du dispositif de gestion de comptes utilisateurs, ledit annuaire d'identité comprenant des identifiants référents relatifs aux utilisateurs de la pluralité d'applications.

Selon un quatrième objet de l'invention, elle concerne un procédé d'alimentation d'une base de signature unique gérée par un dispositif de signature unique, ledit procédé comprenant les étapes de :
- créer une authentification primaire pour chaque utilisateur enregistré dans une base de référence utilisateurs, ladite authentification primaire permettant l'accès à la pluralité d'applications ;
- lire ladite base de référence utilisateurs comprenant des références utilisateurs relatives aux utilisateurs de la pluralité d'applications ; et
- recevoir un message provenant du dispositif de gestion de comptes utilisateurs, ledit message comprenant :
   - un compte utilisateur créé par le dispositif de gestion de comptes utilisateurs pour une application donnée ;
   - une référence utilisateur du dispositif de signature unique correspondant au compte utilisateur créé ;
   - une référence application du dispositif de signature unique correspondant à l'application pour laquelle le compte utilisateur a été créé.

Selon un cinquième objet de l'invention, elle concerne un système de gestion de comptes utilisateurs d'utilisateurs d'une pluralité d'applications, ledit système de gestion étant apte à créer des comptes utilisateur pour ladite pluralité d'applications et à permettre l'accès à au moins une application pour au moins un utilisateur au moyen d'une authentification primaire, ledit système de gestion comprenant un dispositif de gestion de comptes utilisateurs selon l'une quelconque des caractéristiques précédentes, et au moins un dispositif de signature unique selon l'une quelconque des caractéristiques précédentes.

Dans un mode de réalisation non limitatif, le système de gestion de comptes utilisateurs comprend une pluralité de dispositifs de signature unique.

Selon un sixième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé de gestion de comptes utilisateurs selon l'une quelconque des caractéristiques précédentes, lorsqu'il est chargé sur un ordinateur.

Selon un septième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé d'alimentation d'une base selon la caractéristique précédente, lorsqu'il est chargé sur un ordinateur.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- La Fig. 1 représente schématiquement un mode de réalisation non limitatif d'un dispositif de gestion de comptes utilisateurs selon l'invention ;
- La Fig. 2 représente schématiquement un mode de réalisation non limitatif d'un dispositif de signature unique avec lequel le dispositif de gestion de comptes utilisateurs de la Fig. 1 communique ;
- La Fig. 3 est un diagramme montrant la manière dont le dispositif de gestion de comptes utilisateurs de la Fig. 1 et le dispositif de signature unique de la Fig. 2 coopèrent ;
- La Fig. 4 est un schéma d'un premier mode de réalisation non limitatif d'un système de gestion de droits comprenant le dispositif de gestion de comptes utilisateurs de la Fig. 1 et le dispositif de signature unique de la Fig. 2 ;
- La Fig. 5 est un schéma d'un deuxième mode de réalisation non limitatif d'un système de gestion de comptes utilisateurs comprenant le dispositif de gestion de comptes utilisateurs de la Fig. 1 et le dispositif de signature unique de la Fig. 2 ;
- La Fig. 6 est un organigramme illustrant un mode de réalisation non limitatif d'un procédé de gestion de comptes utilisateurs mis en oeuvre par le dispositif de gestion de comptes utilisateurs de la Fig. 1 ;
- La Fig. 7 est un organigramme illustrant un mode de réalisation non limitatif d'un procédé d'alimentation d'une base de signature unique gérée par le dispositif de signature unique mis en oeuvre par le dispositif de signature unique de la Fig. 2 ; et
- La Fig. 8 représente schématiquement un système de gestion de comptes utilisateurs comprenant le dispositif de gestion de comptes utilisateurs de la Fig. 1 apte à mettre en oeuvre le procédé de gestion de la Fig. 6, et comprenant le dispositif de signature unique de la Fig. 2 apte à mettre en oeuvre le procédé Fig. 7.

### DESCRIPTION DES FORMES DE REALISATION PREFEREES DE L'INVENTION

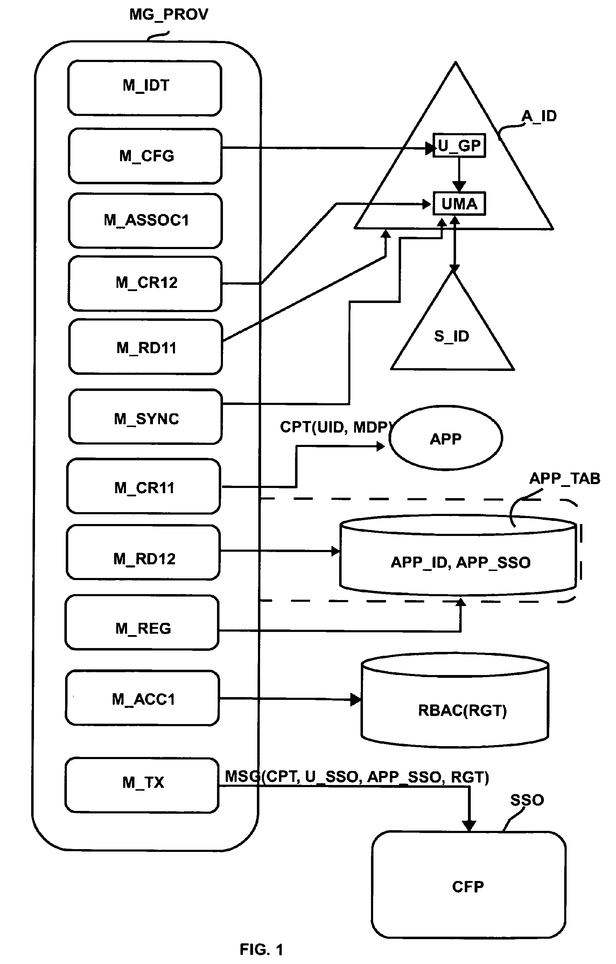

Le dispositif de gestion de comptes utilisateurs d'utilisateurs d'une pluralité d'applications apte à coopérer avec au moins un dispositif de signature unique, ledit dispositif de signature unique étant apte à permettre l'accès à au moins une application pour au moins un utilisateur au moyen d'une authentification primaire, est décrit dans un mode de réalisation non limitatif à la Fig. 1.

Dans la suite de la description, on appelle également le dispositif de gestion de comptes utilisateurs, dispositif de gestion.

Un tel dispositif de gestion de comptes utilisateurs, appelé également dispositif de provisionnement, permet de gérer les comptes des utilisateurs au sein d'applications existantes à partir d'une politique de sécurité centrale. Cette gestion des comptes utilisateurs dans les applications comprend :
- la création de comptes utilisateurs dans les applications ; et
- l'association des droits à ces comptes utilisateurs.

Le dispositif de gestion de comptes utilisateurs MG_PROV comprend :
- une unité de lecture primaire M_RD11 d'un annuaire d'identité A_ID comprenant des identifiants référents UMA relatifs aux utilisateurs U de la pluralité d'applications APP ;
- une unité de création primaire M_CR11 d'au moins un compte utilisateur CPT pour une application APP ;
- une unité de mise en correspondance primaire M_ASSOC1 du compte utilisateur créé CPT avec l'identifiant référent UMA dudit utilisateur U ;
- une unité de détermination M_IDT d'une base de référence utilisateurs U_REF utilisée par le dispositif de signature unique SSO ;
- une unité de lecture secondaire M_RD12 d'une table de correspondance application APP_TAB comprenant les identifiants des applications APP_ID qu'il provisionne et les références application correspondant APP_SSO des applications gérées par au moins un dispositif de signature unique SSO ;
- une unité d'envoi M_TX audit dispositif de signature unique SSO d'un message MSG comprenant :
   - le compte utilisateur créé CPT ;
   - une référence utilisateur U_SSO du dispositif de signature unique SSO correspondant au compte utilisateur créé CPT ;
   - une référence application APP_SSO du dispositif de signature unique SSO correspondant à l'application APP pour laquelle le compte utilisateur CPT a été créé ;

Dans un mode de réalisation non limitatif illustré à la Fig. 1, le dispositif de gestion de comptes utilisateurs MG_PROV comporte en outre une unité de configuration M_CFG d'un groupe d'utilisateurs U_GP de l'annuaire d'identité A_ID qui indique :
- quel est le dispositif de signature unique SSO qui est associé à ce groupe d'utilisateurs U_GP ; et
- quelle est la base de référence utilisateur U_REF qui est utilisée par ledit dispositif de signature unique SSO, ladite base de référence utilisateur U_REF comprenant les références utilisateurs U_SSO.

Dans un mode de réalisation non limitatif illustré à la Fig. 1, le dispositif de gestion de comptes utilisateurs MG_PROV comporte en outre une unité d'enregistrement M_REG de toute application utilisée par le logiciel de provisionnement M_PROV dans la table de correspondance application APP_TAB et dans le dispositif de signature unique SSO et vice et versa.

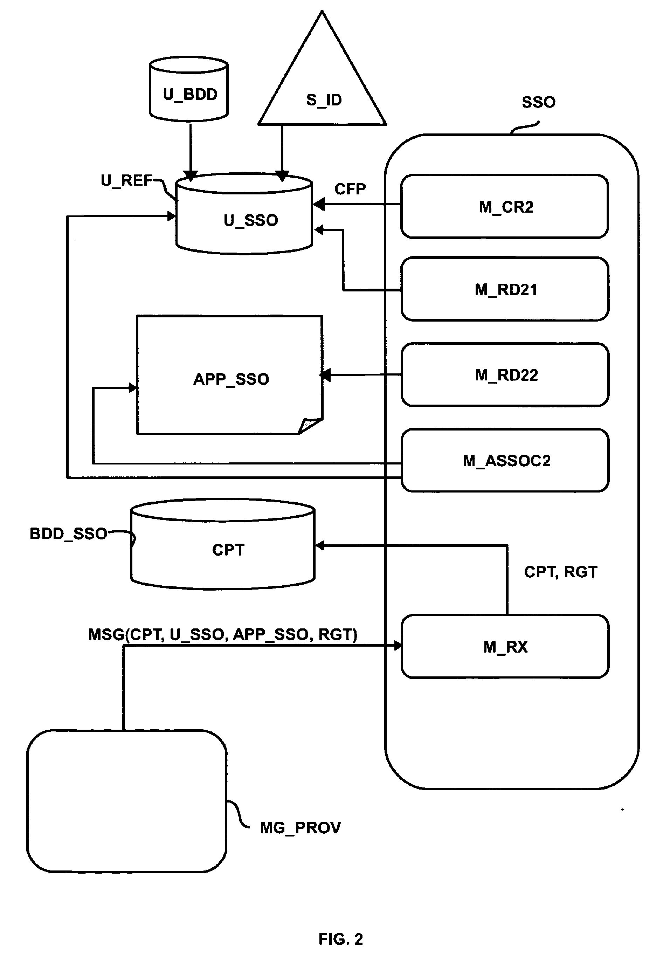

Le dispositif de gestion de comptes utilisateurs MG_PROV est apte à coopérer avec un dispositif de signature unique SSO qui est décrit dans un mode de réalisation non limitatif à la Fig. 2.

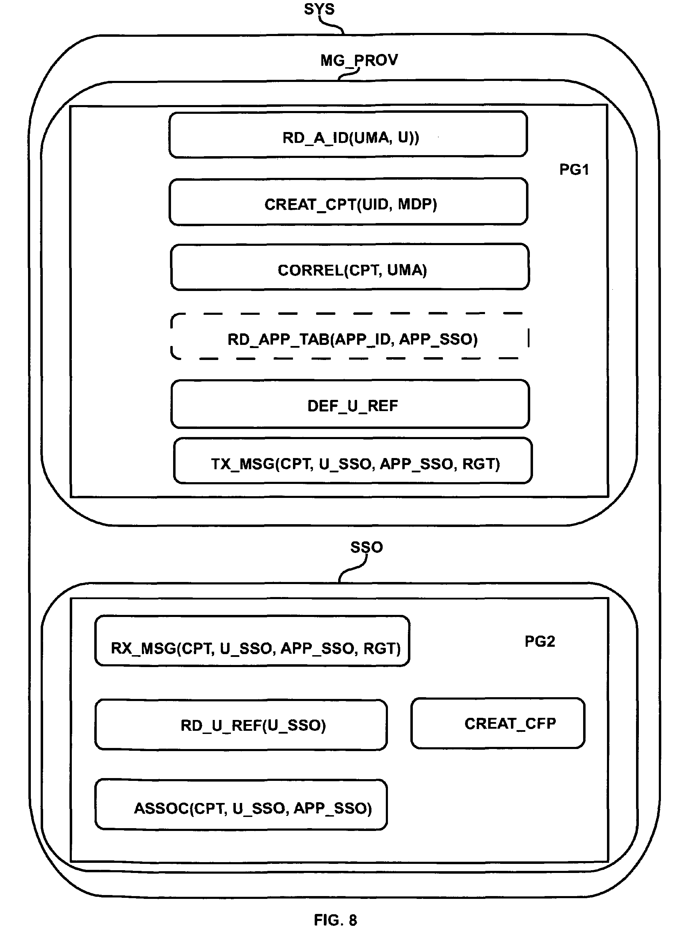

Ainsi, tel qu'illustré à la Fig. 8, le dispositif de gestion de comptes utilisateurs MG_PROV permet de mettre en oeuvre un procédé de gestion de comptes utilisateurs d'une pluralité d'applications, ledit procédé comprenant les étapes de :
- lire un annuaire d'identité A_ID comprenant des identifiants référents UMA relatifs à des utilisateurs U de la pluralité d'applications APP (étape appelée RD_A_ID(UMA, U));
- créer au moins un compte utilisateur CPT pour une application APP (étape appelée CREAT_CPT(UID, MDP)) ;
- mettre en correspondance primaire M_ASSOC1 du compte utilisateur créé CPT avec l'identifiant référent UMA dudit utilisateur U (étape appelée CORREL(CPT, UMA)) ;
- déterminer au moins une base de référence utilisateurs U_REF utilisée par au moins un dispositif de signature unique SSO (étape appelée DEF_U_REF) ;
- envoyer audit dispositif de signature unique SSO d'un message MSG comprenant (étape appelée TX_MSG(CPT, U_SSO, APP_SSO, RGT)) :
   - le compte utilisateur créé CPT ;
   - une référence utilisateur U_SSO du dispositif de signature unique SSO correspondant au compte utilisateur créé CPT ;
   - une référence application APP_SSO du dispositif de signature unique SSO correspondant à l'application APP pour laquelle le compte utilisateur CPT a été créé.

Dans un mode de réalisation non limitatif, le message MSG comprend en outre les droits RGT attribués au compte utilisateur créé CPT pour définir le mode de fonctionnement du dispositif de signature unique pour ce compte utilisateur CPT.

Ainsi, dans un mode de réalisation non limitatif, Dans un mode de réalisation non limitatif, le procédé comprend en outre une étape d'envoyer, les droits RGT attribués au compte utilisateur créé CPT pour définir le mode de fonctionnement du dispositif de signature unique pour ce compte utilisateur CPT.

Dans un mode de réalisation non limitatif, le procédé comprend en outre une étape de lire une table de correspondance application APP_TAB comprenant les identifiants des applications APP_ID qu'il provisionne et les références application correspondant APP_SSO des applications gérées par au moins un dispositif de signature unique SSO (étape RD_APP_TAB(APP_ID, APP_SSO) telle qu'illustrée en trait discontinus).

Le dispositif de signature unique SSO est apte à permettre l'accès à au moins une application APP pour au moins un utilisateur U au moyen d'une authentification primaire CFP et comprend :
- une unité de création M_CR2 d'une authentification primaire CFP pour chaque utilisateur U enregistré dans une base de référence utilisateurs U_REF, ladite authentification primaire CFP permettant l'accès à la pluralité d'applications APP pour ledit utilisateur U ;
- une unité de lecture M_RD2 de ladite base de référence utilisateurs U_REF comprenant des références utilisateurs U_SSO relatifs aux utilisateurs U de la pluralité d'applications APP ;
- une unité de réception M_RX d'un message MSG provenant d'un dispositif de gestion de comptes utilisateurs MG_PROV des utilisateurs des applications APP, ledit message MSG comprenant :
   - le compte utilisateur créé CPT par le dispositif de gestion de comptes utilisateurs MG_PROV pour une application donnée APP;
   - une référence utilisateur U_SSO du dispositif de signature unique SSO correspondant au compte utilisateur créé CPT ;
   - une référence application APP_SSO du dispositif de signature unique SSO correspondant à l'application APP pour laquelle le compte utilisateur CPT a été créé.
- une unité de mise en correspondance secondaire M_ASSOC2 du compte utilisateur reçu CPT avec la référence utilisateur reçue U_SSO et pour l'application APP dont le nom APP_SSO a été reçu.

Ainsi, tel qu'illustré à la Fig. 8, le dispositif de signature unique SSO permet de mettre en oeuvre un procédé d'alimentation d'une base BDD_SSO gérée par ledit dispositif SSO, ledit procédé comprenant les étapes de :
- créer une authentification primaire CFP pour chaque utilisateur U enregistré dans une base de référence utilisateurs U_REF, ladite authentification primaire CFP permettant l'accès à la pluralité d'applications APP (étape appelée CREAT_CFP) ;
- lire ladite base de référence utilisateurs U_REF comprenant des références utilisateurs U_SSO relatives aux utilisateurs U de la pluralité d'applications APP (étape appelée RD_U_REF(U_SSO)) ; et
- recevoir un message MSG provenant du dispositif de gestion de comptes utilisateurs MG_PROV, ledit message MSG comprenant (étape appelée RX_MSG(CPT, U_SSO, APP_SSO, RGT)) :
   - un compte utilisateur créé CPT par le dispositif de gestion de comptes utilisateurs MG_PROV pour une application donnée APP ;
   - une référence utilisateur U_SSO du dispositif de signature unique SSO correspondant au compte utilisateur créé CPT ;
   - une référence application APP_SSO du dispositif de signature unique SSO correspondant à l'application APP pour laquelle le compte utilisateur CPT a été créé.

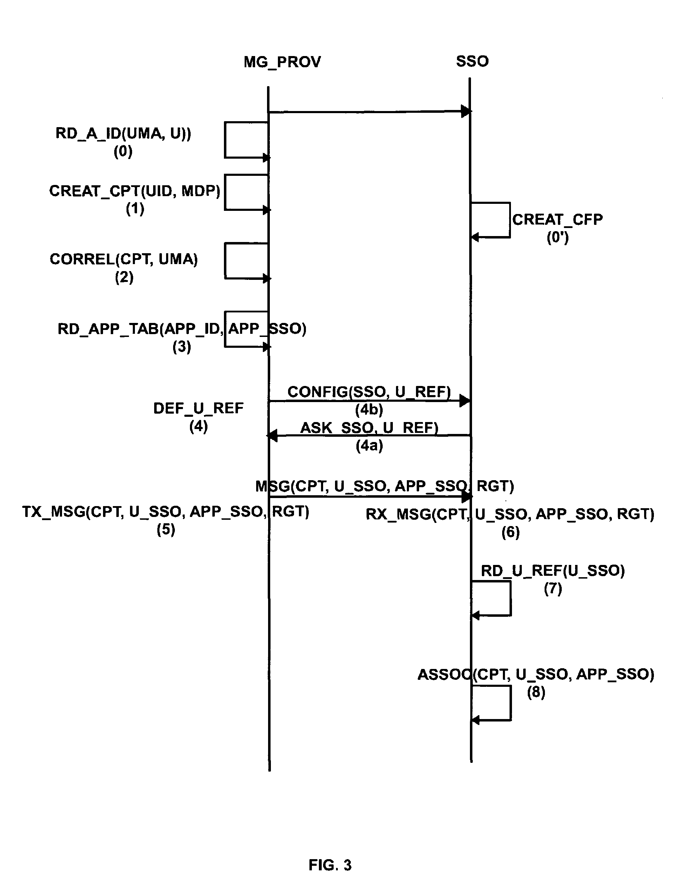

Lorsque le dispositif de gestion de comptes utilisateurs MG_PROV veut créer un compte utilisateur CPT pour un utilisateur donné U de l'annuaire d'identité A_ID et pour une application donnée APP, il coopère avec le dispositif de signature unique de la manière suivante telle qu'illustrée sur les figures 3, 4, 5, 6 et 7 dans un mode de réalisation non limitatif.
Pour illustrer la suite du procédé, dans un exemple non limitatif, l'annuaire d'identité A_ID comprend une pluralité d'identifiants référents donc un identifiant référent « Jean Dupont ».

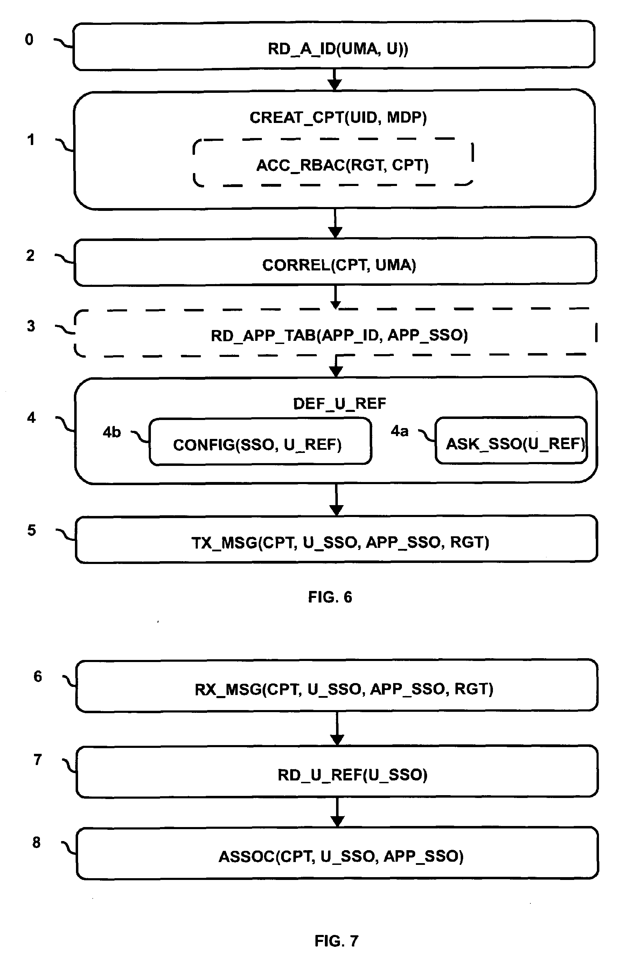

**Dans une étape initiale 0),** illustrée à la Fig. 3 et à la Fig. 6, le dispositif de gestion de comptes utilisateurs MG_PROV lit l'annuaire d'identité A_ID comprenant des identifiants référents UMA relatifs à des utilisateurs U de la pluralité d'applications APP.

Ainsi, dans l'exemple non limitatif pris, le dispositif de gestion de comptes utilisateurs MG_PROV lit l'annuaire d'identité A_ID et notamment l'identifiant référent « Jean Dupont » pour lequel il va créer un compte utilisateur CPT. Cette étape va permettre d'effectuer l'étape de mise en correspondance décrite plus loin.

Dans un premier mode de réalisation non limitatif, le dispositif de gestion MG_PROV créé les identifiant référents UMA de l'annuaire d'identité A_ID.
A cet effet, le dispositif de gestion MG_PROV comporte en outre une unité de création M_CR1 des identifiants référents UMA des utilisateurs de l'annuaire d'identité A_ID.

Dans un deuxième mode de réalisation non limitatif, le dispositif de gestion MG_PROV synchronise les identifiants référents UMA des utilisateurs de l'annuaire d'identité A_ID à partir d'une source d'identité S_ID. A cet effet, le dispositif de gestion de comptes utilisateurs MG_PROV comporte en outre une unité de synchronisation M_SYNC des identifiants référents UMA des utilisateurs de l'annuaire d'identité A_ID à partir d'une source d'identité S_ID.
On notera qu'une source d'identités S_ID est une base d'information disponible qui contient des informations d'identités sur les utilisateurs. Dans des exemples non limitatifs, c'est une base de données des ressources humaines, un annuaire d'une entreprise, des fichiers clients, etc.
Dans une variante de réalisation non limitative de ce mode, la synchronisation permet de recopier dans l'annuaire d'identité A_ID un matricule IMA correspondant de la source d'identité S_ID dans un attribut origine ATT_O associé à l'identifiant référent UMA.
Dans l'exemple non limitatif décrit précédemment de l'utilisateur qui a un identifiant référent « Jean Dupont » de l'annuaire d'identité A_ID et qui est connu en tant que « HVZ42YK » dans la source d'identité S_ID, la synchronisation permet de recopier dans l'annuaire d'identité A_ID le matricule « HVZ42YK » dans l'attribut origine ATT_O associé à l'identifiant référent « Jean Dupont ».

Bien entendu, cette étape peut être faite à tout moment lorsque le dispositif de gestion MG_PROV a besoin de connaître l'identifiant référent UMA d'un utilisateur donné U. Ainsi, cette étape peut être réalisée en parallèle de l'étape 1.
On notera que l'on peut avoir une combinaison des deux modes de réalisation cités précédemment, à savoir une création des identifiants référents par le dispositif de gestion MG_PROV et une synchronisation.

**Dans une première étape 1),** illustrée à la Fig. 3 et à la Fig. 6, le dispositif de gestion de comptes utilisateurs MG_PROV crée au moins un compte utilisateur CPT pour une application APP.
Dans un mode de réalisation non limitatif, ledit compte utilisateur CPT comprend un identifiant UID et un mot de passe MDP pour une application donnée APP.
Dans un exemple non limitatif, un compte utilisateur CPT3 = « jdupont, MDP3 » est créé pour une application APP3, un compte utilisateur CPT2 = « jdp42, MDP2 » est créé pour une application APP2.

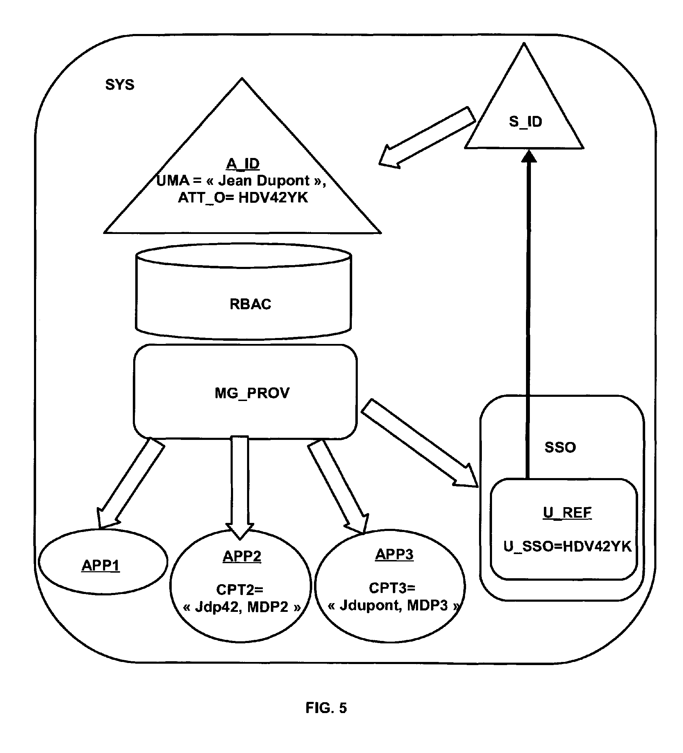

Cette étape comporte une sous étape 1'), dénommée ACC_RBAC(RGT, CPT) et illustrée à la Fig. 5, selon laquelle le dispositif de gestion de comptes utilisateurs MG_PROV associe des droits RGT au compte utilisateur ainsi créé.

Ainsi, dans un mode de réalisation non limitatif, le dispositif de gestion de comptes utilisateurs MG_PROV attribue des droits RGT au compte utilisateur créé CPT à partir d'un système de gestion de politique centralisée RBAC.

A cet effet, le dispositif de gestion de comptes utilisateurs MG_PROV comprend une unité d'association M_ACC1 de droits RGT au compte utilisateur créé CPT à partir d'un système de gestion de politique centralisée RBAC.
Dans un mode de réalisation non limitatif, le système de politique centralisée RBAC se base sur un modèle de contrôle d'accès dans lequel chaque décision d'accès est basée sur le rôle auquel un utilisateur est attaché. Un rôle découle généralement de la structure d'une entreprise. Ainsi, les utilisateurs exerçant des fonctions similaires peuvent être regroupés sous le même rôle. Un rôle, déterminé par une autorité centrale, ici, le système de politique centralisée, associe à un sujet des autorisations d'accès sur un ensemble objets. Un tel modèle de contrôle d'accès, appelé en anglais « Role-Based Access Control », étant connu de l'homme du métier, il n'est pas décrit plus en détail ici.
On notera que le système de politique centralisée RBAC peut être intégrée dans le dispositif de gestion de comptes utilisateurs ou externe à celui-ci.

Ainsi, la gestion des droits à partir d'un système de gestion de politique centralisée permet de gérer les droits des utilisateurs au sein des différentes applications à l'aide d'un outil unique :
- il n'y a qu'une seule interface d'administration à connaître (alors que les interfaces d'administration des applications sont souvent très différentes)
- Il y a une visibilité à un seul endroit de tous les droits des utilisateurs. Ceci permet d'établir par exemple des rapports sur les droits d'une personne au sein d'une entreprise et ainsi d'avoir une traçabilité sur ces droits.
- On peut effectuer des regroupements possibles des droits au sein de profils (que l'on peut nommer rôles) pour une plus grande facilité de gestion
- Cela permet d'appliquer la règle de séparation des pouvoirs : il est interdit de posséder deux droits incompatibles au niveau sécurité ou déontologique) au sein d'une application (si celle-ci ne le prévoit pas) ou entre applications.

**Dans une deuxième étape 2),** à la Fig. 3 et à la Fig. 6, le dispositif de gestion de comptes utilisateurs MG_PROV met en correspondance le compte utilisateur créé CPT avec l'identifiant référent UMA dudit utilisateur U pour lequel un compte utilisateur CPT a été créé.
Ainsi, les deux comptes utilisateurs créés CPT3 « jdupont, MDP3 » et CPT2 « jdp42, MDP2 » sont mis en correspondance avec l'identifiant référent « Jean Dupont ».
Le dispositif de gestion de comptes utilisateur MG_PROV stocke le fait que ces deux comptes CPT2 et CPT3 ont été créés pour l'identifiant référent « Jean Dupont » et respectivement pour les applications APP2 et APP3.
**Dans une troisième étape 3),** illustrée à la Fig. 3 et à la Fig. 6, le dispositif de gestion de comptes utilisateurs MG_PROV lit une table de correspondance application APP_TAB comprenant les identifiants des applications APP_ID qu'il provisionne et les références application correspondant APP_SSO des applications gérées par au moins un dispositif de signature unique SSO.
Cela permet au dispositif de gestion de comptes utilisateurs de pouvoir dialoguer avec un dispositif de signature unique sans imposer une normalisation des noms d'applications.
On notera qu'on entend par le terme « provisionner une application », le fait de gérer les comptes utilisateurs desdites applications.
Dans un mode de réalisation non limitatif, tel qu'illustré en traits discontinus à la Fig. 1, le dispositif de gestion de comptes utilisateurs MG_PROV comporte la table de correspondance application APP_TAB. La table est ainsi intégrée audit dispositif MG_PROV. Bien entendu, elle peut être également externe.
Ainsi, dans un exemple purement illustratif et non limitatif, l'application APP2 aura comme identifiant APP_ID = « ressources humaines », tandis qu'elle aura comme référence application correspondante APP_SSO = « DRH ».
Afin de mettre à jour régulièrement la table de correspondance application APP_TAB, le dispositif de gestion de comptes utilisateurs doit connaître toutes les applications APP que gèrent un dispositif de signature unique SSO avec lequel il coopère.

Ainsi, le dispositif de gestion de comptes utilisateurs MG_PROV enregistre toute application APP utilisée par le dispositif de signature unique SSO dans la table de correspondance application APP_TAB avec la référence application APP_SSO utilisée par le dispositif de signature unique SSO et lui applique un identifiant application APP_ID correspondant.

A cet effet, dans un mode de réalisation non limitatif, le dispositif de gestion de comptes utilisateurs MG_PROV comporte en outre une unité d'enregistrement M_REG de toute application APP utilisée par le dispositif de signature unique SSO dans la table de correspondance application APP_TAB.

A cet effet, le dispositif de gestion MG_PROV interroge régulièrement le dispositif de signature unique SSO pour connaître les références application APP_SSO des applications APP que ce dernier gère.

Ainsi, lorsque le compte utilisateur CPT est créé avec les droits associés RGT, et que la référence application APP_SSO utilisée par le dispositif de signature unique SSO est connue, l'étape suivante est réalisée.
Bien entendu, si le dispositif de gestion MG_PROV et le dispositif de signature unique utilisent la même appellation pour les applications APP, la table de correspondance APP_TAB comporte les mêmes appellations.

**Dans une quatrième étape 4),** illustrée à la Fig. 3 et à la Fig. 6, le dispositif de gestion de comptes utilisateurs MG_PROV détermine la base de référence utilisateurs U_REF utilisée par le dispositif de signature unique SSO.
Ainsi, cette étape permet de déterminer les correspondances entre les utilisateurs U d'un groupe de l'annuaire d'identité A_ID et le dispositif de signature unique SSO qui est utilisé, et ainsi va permettre d'établir une correspondance entre les utilisateurs U de l'annuaire d'identité A_ID et la base de référence utilisateur U_REF utilisée par le dispositif de signature unique SSO.

Dans un premier mode de réalisation non limitatif, cette étape de déterminer la base de référence utilisateurs U_REF s'effectue en configurant un groupe d'utilisateurs U_GP de l'annuaire d'identité A_ID en indiquant :
- quel est le dispositif de signature unique SSO qui est associé à ce groupe d'utilisateurs U_GP ; et
- quelle est la base de référence utilisateur U_REF qui est utilisée par ledit dispositif de signature unique SSO, ladite base de référence utilisateur U_REF comprenant des références utilisateurs U_SSO.
Le dispositif de gestion MG_PROV se comporte ainsi en maître car c'est lui qui impose la base de référence U_REF à utiliser au dispositif de signature unique SSO.
On notera que dans un mode de réalisation non limitatif, le groupe d'utilisateur U_GP peut être l'ensemble des utilisateurs de l'annuaire d'identité A_ID. Ainsi, on peut avoir un unique dispositif de signature unique SSO utilisé par l'ensemble des utilisateurs de l'annuaire d'identité ID.

Dans un deuxième mode de réalisation non limitatif, cette étape de déterminer la base de référence utilisateurs U_REF s'effectue en interrogeant le dispositif de signature unique SSO pour connaître la base de référence utilisateurs U_REF que ledit dispositif de signature unique SSO utilise. A cet effet, c'est l'unité de détermination M_IDT qui interroge le dispositif de signature unique SSO pour connaître la base de référence utilisateurs U_REF que ledit dispositif de signature unique SSO utilise.
Le dispositif de gestion MG_PROV se comporte ainsi en esclave pour la détermination de la base de référence U_REF car c'est le dispositif de signature unique SSO qui a choisit sa base de référence utilisateur U_REF et qui lui indique laquelle c'est.

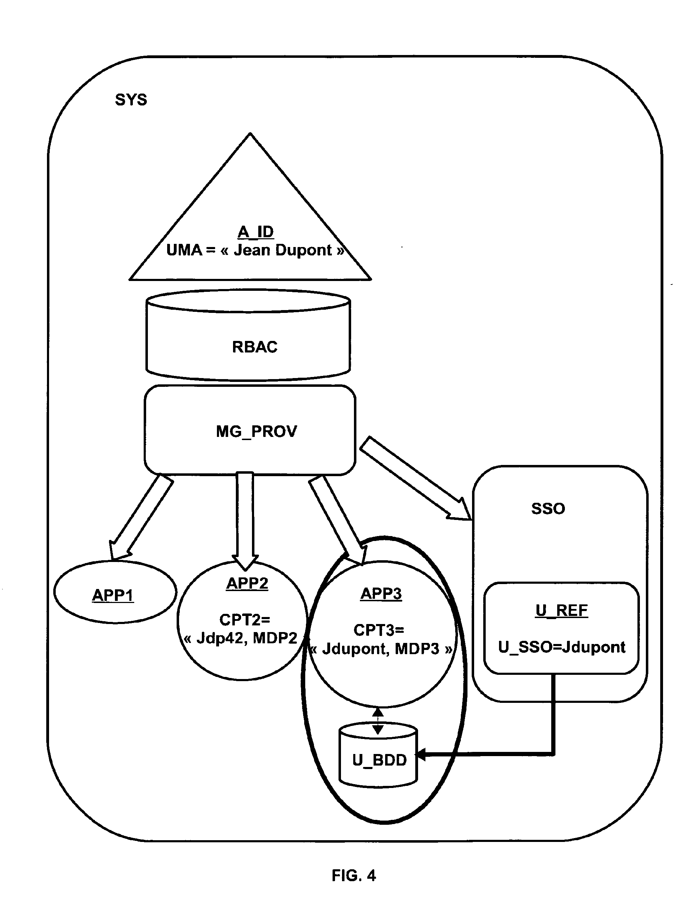

Dans un premier mode de réalisation non limitatif illustré à la Fig. 4, la base de référence utilisateurs U_REF est une base d'utilisateurs U_BDD d'une application APP provisionnée par le dispositif de gestion de comptes utilisateurs MG_PROV. Dans l'exemple non limitatif de la Fig. 3, la base utilisateur de l'application APP3 est utilisée comme base de référence U_REF.
Dans un exemple non limitatif, l'utilisateur « Jean Dupont » de l'annuaire d'identité A_ID sera connu en tant que « jdupont » dans la base utilisateur U_BDD de l'application APP3.

Dans un deuxième mode de réalisation non limitatif illustré à la Fig. 5, la base de référence utilisateurs U_REF est une source d'identités S_ID utilisée comme source pour un annuaire d'identité A_ID du dispositif de gestion de comptes utilisateurs MG_PROV, ledit annuaire d'identité A_ID comprenant des identifiants référents UMA relatifs aux utilisateurs U de la pluralité d'applications APP.
Dans un exemple non limitatif, l'utilisateur « Jean Dupont » de l'annuaire d'identité A_ID sera connu en tant que « HVZ42YK » dans la source d'identité S_ID. Ainsi, dans la source d'identité S_ID « Jean Dupont » est désignée par le matricule « HVZ42YK » auquel est associé des attributs nom = Dupont et prénom = Jean.

**Dans une cinquième étape 5),** à la Fig. 3 et à la Fig. 6, le dispositif de gestion de comptes utilisateurs MG_PROV envoie audit dispositif de signature unique SSO un message MSG comprenant :
- le compte utilisateur créé CPT ;
- la référence utilisateur U_SSO du dispositif de signature unique SSO correspondant au compte utilisateur créé CPT ;
- la référence application APP_SSO du dispositif de signature unique SSO correspondant à l'application APP pour laquelle le compte utilisateur CPT a été créé.
On notera que du fait de la connaissance, par le dispositif de gestion MG_PROV, de la base de référence U_REF utilisée par le dispositif de signature unique SSO, ledit dispositif de gestion MG_PROV sait quelle est la référence utilisateur U_SSO dans la base de référence U_REF du dispositif de signature unique SSO qui correspond à l'utilisateur U dont il a créé le compte CPT.
Dans l'exemple non limitatif de la Fig. 4, le dispositif de gestion MG_PROV sait que la base de référence UREF est celle de l'application APP3. Comme il a stocké le fait que pour l'application APP3, le compte utilisateur créé CPT3 = « jdupont, MDP3 », il connaît la référence utilisateur U_SSO qui est donc « jdupont ».
Dans l'exemple non limitatif de la Fig. 5, le dispositif de gestion MG_PROV sait que la base de référence UREF est la source d'identité S_ID.
Comme il a stocké le fait que pour cette source d'identité S_ID, pour l'utilisateur « Jean Dupont », son attribut d'origine ATT_O (qui provient de la source d'identité) est « HVZ42YK », il connaît la référence utilisateur U_SSO qui est donc «HVZ42YK ».
Dans l'exemple donné à titre illustratif, le mot de passe MDP2 du compte utilisateur CPT2 = « jdp42, MDP2 » est envoyé au dispositif de signature unique SSO, avec comme référence application APP_SSO=DRH qui est la référence application de l'application APP2 et avec :
- comme référence utilisateur U_SSO= « jdupont » dans le cas où la base de référence utilisateur U_REF est la base utilisateur U_BDD de l'application APP3 dans le premier mode de réalisation décrit précédemment et tel qu'illustré sur la Fig. 4.
- comme référence utilisateur U_SSO= « HVZ42YK » dans le cas où la base de référence utilisateur U_REF est une source d'identité S_ID dans le second mode de réalisation décrit précédemment et tel qu'illustré sur la Fig. 5.

De son côté, le dispositif de signature unique SSO effectue les étapes suivantes.

Dans un mode de réalisation non limitatif illustré à la Fig. 3 et à la Fig. 4, le message MSG comprend en outre des droits RGT attribués au compte utilisateur créé CPT pour définir le mode de fonctionnement du dispositif de signature unique pour ce compte utilisateur CPT.
Ainsi, le dispositif de gestion de comptes utilisateurs MG_PROV envoie au dit dispositif de signature unique SSO également ces droits RGT. Dans des exemples non limitatifs, ces droits RGT peuvent être des horaires de lancement du dispositif de signature unique, des postes de travail sur lesquels le dispositif de signature unique peut être uniquement lancé...

**Dans une sixième étape 6),** dénommée RX_MSG(CPT, U_SSO, APP_SSO, RGT) et illustrée à la Fig. 3 et à la Fig. 7, le dispositif de signature unique SSO reçoit un message MSG provenant d'un dispositif de gestion de comptes utilisateurs MG_PROV des utilisateurs des applications APP, ledit message MSG comprenant :
- un compte utilisateur créé CPT par le dispositif de gestion de comptes utilisateurs MG_PROV pour une application donnée APP ;
- la référence utilisateur U_SSO du dispositif de signature unique SSO correspondant au compte utilisateur créé CPT ;
- la référence application APP_SSO du dispositif de signature unique SSO correspondant à l'application APP pour laquelle le compte utilisateur CPT a été créé.

Dans un mode de réalisation non limitatif illustré à la Fig. 3 et à la Fig. 7, le dispositif de signature unique SSO reçoit également dans ledit message MSG des droits RGT attribués au compte utilisateur créé CPT pour définir le mode de fonctionnement du dispositif de signature unique pour ce compte utilisateur CPT.
Ainsi, en recevant directement la référence utilisateur U_SSO de la base de référence U_REF dont il se sert et le nom de l'application APP dont il se sert, le dispositif de signature unique SSO n'a pas à connaître l'identifiant référent UMA de l'utilisateur U dont le compte CPT a été créé, ni l'identifiant de l'application APP_ID employé par le dispositif de gestion de comptes utilisateurs MG_PROV. Ledit identifiant référent UMA et ledit identifiant de application APP_ID sont ainsi transparents pour lui. Il sait qu'il doit associer le compte utilisateur créé pour l'utilisateur U de référence utilisateur U_REF et pour l'application APP dont il a également reçu la référence APP_SSO qu'il utilise.
Ainsi, le dispositif de signature unique SSO enregistre les comptes utilisateurs reçus CPT dans une base BDD_SSO.
Dans des modes de réalisation non limitatif, cette base BDD_SSO est soit la base de référence utilisateur U_REF, soit une base différente qui va pointer sur la base de référence utilisateur U_REF.
Dans un mode de réalisation non limitatif, la base BDD_SSO peut comporter également les authentifications primaires CFP.

**Ainsi, dans une septième étape 7),** dénommée RD_U_REF(U_SSO) et illustrée à la Fig. 3 et à la Fig. 7, le dispositif de signature unique SSO lit la base de référence utilisateurs U_REF comprenant des références utilisateurs U_SSO relatives aux utilisateurs U de la pluralité d'applications APP.
A cet effet, le dispositif de signature unique SSO comporte une unité de lecture primaire M_RD21 de ladite base de référence utilisateurs U_REF comprenant des références utilisateurs U_SSO relatives aux utilisateurs U de la pluralité d'applications APP.
Cette étape permet au dispositif de signature unique SSO de déterminer si la référence utilisateur U_SSO qu'il a reçu dans le message MSG fait bien partie de la base de référence utilisateurs U_REF dont il se sert, et donc correspond bien à un utilisateur qu'il gère. On notera que par gestion d'utilisateur, on entend que le dispositif de signature unique SSO gère l'authentification de cet utilisateur vers les applications dont ledit dispositif s'occupe.

Comme vu précédemment, dans un premier mode de réalisation, tel qu'illustré à la Fig. 4, la base de référence utilisateurs U_REF est une base d'utilisateurs U_BDD d'une application APP provisionnée par le dispositif de gestion de comptes utilisateurs MG_PROV.

Dans un second mode de réalisation, tel qu'illustré à la Fig. 5, la base de référence utilisateurs U_REF est une source d'identités S_ID utilisée comme source pour un annuaire d'identité A_ID du dispositif de gestion de comptes utilisateurs MG_PROV, ledit annuaire d'identité A_ID comprenant des identifiants référents UMA relatifs aux utilisateurs U de la pluralité d'applications APP.

**Dans une huitième étape 8),** dénommée ASSOC(CPT, U_SSO, APP_SSO) et illustrée à la Fig. 3 et à la Fig. 7, le dispositif de signature unique SSO met en correspondance le compte utilisateur reçu CPT avec la référence utilisateur reçue U_SSO et pour l'application APP dont la référence application APP_SSO a été reçue.
A cet effet, le dispositif de signature unique SSO comporte une unité de mise en correspondance secondaire M_ASSOC2 du compte utilisateur reçu CPT avec la référence utilisateur reçue U_SSO et pour l'application APP dont la référence application APP_SSO a été reçue.
Cette unité de correspondance M_ASSOC2 utilise les bases BDD_SSO, U_REF et la base comprenant les références applications APP_SSO.
Ainsi, cette étape permet au dispositif de signature unique SSO de savoir quels sont les comptes utilisateurs CPT (donc identifiant et mot de passe) qui sont associés à tel utilisateur U qu'il connaît et pour quelles applications APP.
Ainsi, dans l'exemple non limitatif décrit précédemment et illustré à la Fig. 4, le dispositif de signature unique SSO stocke le fait qu'à l'utilisateur connu sous la référence utilisateur U_SSO = « jdupont », deux comptes utilisateurs CPT2 = « jdp42, MDP2 » et CPT3 = « jdupont, MDP3 » sont associés respectivement pour les applications connues sous la référence application APP_SS02 = DRH et APP_SS03 = COMPTA.

On notera que bien entendu, lors d'une étape initiale 0'), dénommée CREAT_CFP et illustrée à la Fig. 3 et à la Fig. 8, le dispositif de signature unique créé une authentification primaire pour chaque utilisateur enregistré dans une base de référence utilisateurs, ladite authentification permettant l'accès à la pluralité d'applications et étant unique, comme décrit précédemment. Ainsi, une authentification primaire CFP aura été créée préalablement pour l'utilisateur connu sous la référence utilisateur « jdupont » ou « HVZ42YK » dans les exemples pris précédemment.

Ainsi, ce provisionnement du dispositif de signature unique SSO au moyen d'un dispositif externe qui est le dispositif de gestion MG_PROV permet de vérifier d'une part le compte utilisateur d'un utilisateur sans que ce dernier ne connaisse et notamment son mot de passe MDP d'une application lorsqu'il se connecte à ladite application et d'accéder d'autre part à ladite application APP. On notera que dans un autre mode non limitatif, l'utilisateur ne connaît ni son identifiant ID, ni son mot de passe MDP. Lorsque le message reçu MSG contient également des droits RGT attribués au compte utilisateur créé CPT pour définir le mode de fonctionnement du dispositif de signature unique pour ce compte utilisateur CPT, le dispositif de signature unique SSO s'exécute en fonction de ces droits.
Ainsi, lors de l'utilisation d'un compte utilisateur pour une connexion à une application, le dispositif de signature unique SSO va, après avoir vérifié ce compte utilisateur, envoyer les données du compte utilisateur (à savoir l'identifiant UID et le mot de passe associé MDP à l'application APP concernée. Ceci est possible grâce au stockage des correspondances entre compte utilisateur, référence utilisateur, et référence application comme décrit ci-dessus.

On notera que la mise en oeuvre du procédé de gestion de comptes utilisateurs exposé ci-dessus peut être effectuée au moyen d'un dispositif micro programmé « software », d'une logique câblée et/ou de composants électroniques « hardware ».

Ainsi, le dispositif de gestion de comptes utilisateurs MG_PROV peut comporter un ou plusieurs produits programmes d'ordinateur comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur peut être inscrit en mémoire non volatile inscriptible de type ROM ou en mémoire non volatile réinscriptible de type EEPROM ou FLASH. Ledit programme d'ordinateur peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 8, un premier programme d'ordinateur PG1 est inscrit dans une mémoire du dispositif de gestion de comptes utilisateurs MG_PROV.

Il en est de même pour le procédé mis en oeuvre par le dispositif de signature unique SSO.

Dans l'exemple non limitatif de la Fig. 8, un deuxième programme d'ordinateur PG2 est inscrit dans une mémoire du dispositif de signature unique SSO.

Bien entendu la description de l'invention n'est pas limitée à l'application, aux modes de réalisation et aux exemples décrits ci-dessus.

Ainsi, l'invention décrite présente notamment les avantages suivants :
- elle permet d'interfacer un dispositif de gestion de comptes utilisateurs avec un dispositif de signature unique ;
- elle permet donc de combiner les avantages d'un logiciel de gestion de comptes utilisateurs (à savoir une automatisation de la tâche de création de comptes utilisateurs, donc sans intervention manuelle d'un administrateur, l'application de règles, telles que des règles de nommage des données des comptes utilisateurs) avec les avantages d'un dispositif de signature unique ;
- elle permet de transmettre automatiquement et de manière transparente à l'utilisateur, un compte utilisateur qui lui est associé au dispositif de signature unique ;
- elle évite de divulguer les données d'un compte utilisateur ( notamment les données du mot de passe) à l'utilisateur correspondant et permet ainsi de rendre plus fiable et de sécuriser la gestion des comptes utilisateurs. En effet, la non connaissance du mot de passe par l'utilisateur permet de créer des mots de passe très compliqués (dont un utilisateur ne pourrait pas se souvenir), et donc permet de renforcer la sécurité. Cela évite également à l'utilisateur des efforts de mémoire puisqu'il n'a pas besoin de connaître ce mot de passe.
- elle permet d'avoir une traçabilité complète des connexions effectuées via les comptes utilisateurs grâce au dispositif de signature unique qui a maintenant connaissance desdits comptes utilisateurs ;
- elle permet d'appliquer des contrôles effectués par le dispositif de signature unique aux comptes utilisateurs, tels que la limitation des horaires de connexion, la limitation des postes de travail de connexion, .... ;
- elle évite de devoir utiliser la même base de référence utilisateurs pour le dispositif de gestion de comptes utilisateurs et le dispositif de signature unique. Ainsi, les deux dispositifs peuvent utiliser des règles de nommage différentes pour un même utilisateur. Cela permet ainsi au dispositif de provisionnement de pouvoir prendre en compte un système de SSO déjà existant ;
- elle évite de devoir utiliser les mêmes règles de nommage pour les applications pour le dispositif de gestion de comptes utilisateurs et le dispositif de signature unique. Ainsi, les deux dispositifs peuvent utiliser des noms différents pour une même application ;
- elle permet de se connecter à des applications qui ont des règles de nommage des utilisateurs différentes ;
- elle permet à un dispositif de signature unique d'utiliser n'importe quelle base utilisateur existante qui a sa propre politique de nommage des utilisateurs, que ce soit celle d'une application ou une source d'identité ;
- elle permet d'établir un lien entre les différents comptes utilisateurs d'un même utilisateur et ainsi de connaître l'utilisateur qui est propriétaire de tel ou tel compte ;
- elle permet donc une plus grande souplesse d'utilisation des dispositifs de gestion de comptes utilisateurs, des dispositifs de signature et des applications ;
- elle s'adapte facilement sur des dispositifs de gestion de comptes utilisateurs et des dispositifs de signature unique déjà existant dans le commerce ; et
- elle est simple à mettre en oeuvre.

## Revendications

1. Dispositif de gestion (MG_PROV) de comptes utilisateurs (CPT) d'utilisateurs (U) d'une pluralité d'applications (APP) apte à coopérer avec au moins un dispositif de signature unique (SSO), ledit dispositif de signature unique (SSO) étant apte à permettre l'accès à au moins une application (APP) pour au moins un utilisateur (U) au moyen d'une authentification primaire (CFP), ledit dispositif de gestion (MG_PROV) comprenant :
- une unité de lecture primaire (M_RD11) d'un annuaire d'identité (A_ID) comprenant des identifiants référents (UMA) relatifs à des utilisateurs (U) de la pluralité d'applications (APP) ;
- une unité de création primaire (M_CR11) d'au moins un compte utilisateur (CPT) pour une application (APP) ;
- une unité de détermination (M_IDT) d'une base de référence utilisateurs (U_REF) utilisée par le dispositif de signature unique (SSO) ;
et **caractérisé en ce qu'**il comporte :
- une unité de mise en correspondance primaire (M_ASSOC1) du compte utilisateur créé (CPT) avec l'identifiant référent (UMA) dudit utilisateur (U) pour lequel le compte utilisateur (CPT) a été créé;
- une unité de lecture secondaire (M_RD12) d'une table de correspondance application (APP_TAB) comprenant les identifiants des applications (APP_ID) qu'il provisionne et les références application correspondant (APP_SSO) des applications gérées par au moins un dispositif de signature unique (SSO) ;
- une unité d'envoi (M_TX) audit dispositif de signature unique (SSO) d'un message (MSG) comprenant :
- le compte utilisateur créé (CPT) ;
- une référence utilisateur (U_SSO) du dispositif de signature unique (SSO) correspondant au compte utilisateur créé (CPT) ;
- une référence application (APP_SSO) du dispositif de signature unique (SSO) correspondant à l'application (APP) pour laquelle le compte utilisateur (CPT) a été créé.

2. Dispositif de gestion de comptes utilisateurs (CPT) selon la revendication 1, selon lequel il comporte en outre une unité de configuration (MG_CFG) d'un groupe d'utilisateurs (U_GP) de l'annuaire d'identité (A_ID) apte à indiquer :
- quel est le dispositif de signature unique (SSO) qui est associé à ce groupe d'utilisateurs (U_GP) ; et
- quelle est la base de référence utilisateur (U_REF) qui est utilisée par ledit dispositif de signature unique (SSO), ladite base de référence utilisateur (U_REF) comprenant les références utilisateurs (U_SSO).

3. Dispositif de gestion de comptes utilisateurs (CPT) selon la revendication 1, selon lequel l'unité d'identification (M_IDT) est apte à interroger le dispositif de signature unique (SSO) pour connaître la base de référence utilisateurs (U_REF) que ledit dispositif de signature unique (SSO) utilise.

4. Dispositif de gestion de comptes utilisateurs (CPT) selon l'une quelconque des revendications précédentes, selon lequel il comporte en outre une unité d'enregistrement (M_REG) de toute application (APP) utilisée par le dispositif de signature unique (SSO) dans la table de correspondance application (APP_TAB).

5. Dispositif de gestion de comptes utilisateurs (CPT) selon l'une quelconque des revendications précédentes, selon lequel il comporte en outre une unité d'attribution (M_ACC1) de droits (RGT) au compte utilisateur créé (CPT) à partir d'un système de gestion de politique centralisée (RBAC).

6. Dispositif de gestion de comptes utilisateurs (CPT) selon l'une quelconque des revendications précédentes, selon lequel le message (MSG) comprend en outre des droits (RGT) attribués au compte utilisateur créé (CPT) pour définir le mode de fonctionnement du dispositif de signature unique (SSO) pour ce compte utilisateur (CPT).

7. Dispositif de gestion de comptes utilisateurs (CPT) selon l'une quelconque des revendications précédentes, selon lequel il comporte en outre une unité de création (M_CR12) des identifiants référents (UMA) des utilisateurs de l'annuaire d'identité (A_ID).

8. Dispositif de gestion de comptes utilisateurs (CPT) selon l'une quelconque des revendications précédentes, selon lequel il comporte en outre une unité de synchronisation (M_SYNC) des identifiants référents (UMA) des utilisateurs de l'annuaire d'identité (A_ID) à partir d'une source d'identité (S_ID).

9. Procédé de gestion de comptes utilisateurs (CPT) d'utilisateurs (U) d'une pluralité d'applications (APP) comprenant les étapes de :
- lire un annuaire d'identité (A_ID) comprenant des identifiants référents (UMA) relatifs à des utilisateurs (U) de la pluralité d'applications (APP) ;
- créer au moins un compte utilisateur (CPT) pour une application (APP) ;
- déterminer au moins une base de référence utilisateurs (U_REF) utilisée par au moins un dispositif de signature unique (SSO) ;
et **caractérisé en ce qu'**il comporte les étapes supplémentaires de :
- mettre en correspondance (M_ASSOC1) le compte utilisateur créé (CPT) avec l'identifiant référent (UMA) dudit utilisateur (U) ;
- envoyer (M_TX) audit dispositif de signature unique (SSO) un message (MSG) comprenant :
- le compte utilisateur créé (CPT) ;
- une référence utilisateur (U_SSO) du dispositif de signature unique (SSO) correspondant au compte utilisateur créé (CPT) ;
- une référence application (APP_SSO) du dispositif de signature unique (SSO) correspondant à l'application (APP) pour laquelle le compte utilisateur (CPT) a été créé.

10. Procédé de gestion de comptes utilisateurs (CPT) selon la revendication précédente, selon lequel il comporte en outre une étape de configurer un groupe d'utilisateurs (U_GP) de l'annuaire d'identité (A_ID) en indiquant :
- quel est le dispositif de signature unique (SSO) qui est associé à ce groupe d'utilisateurs (U_GP) ; et
- quelle est la base de référence utilisateur (U_REF) qui est utilisée par ledit dispositif de signature unique (SSO), ladite base de référence utilisateur (U_REF) comprenant les références utilisateurs (U_SSO).

11. Procédé de gestion de comptes utilisateurs (CPT) selon la revendication 10 ou la revendication 11, selon lequel il comporte en outre une étape d'enregistrer toute application utilisée par le dispositif de signature unique (SSO) dans la table de correspondance application (APP_TAB).

12. Dispositif de signature unique (SSO) étant apte à permettre l'accès à au moins une application (APP) pour au moins un utilisateur (U) au moyen d'une authentification primaire (CFP) et étant apte à coopérer avec un dispositif de gestion de comptes utilisateurs (CPT) d'utilisateurs d'une pluralité d'applications (APP), **caractérisé en ce qu'**il comporte :
- une unité de création (M_CR2) d'une authentification primaire (CFP) pour chaque utilisateur (U) enregistré dans une base de référence utilisateurs (U_REF), ladite authentification primaire (CFP) permettant l'accès à la pluralité d'applications (APP) ;
- une unité de lecture primaire (M_RD21) de ladite base de référence utilisateurs (U_REF) comprenant des références utilisateurs (U_SSO) relatives aux utilisateurs (U) de la pluralité d'applications (APP) ;
- une unité de réception (M_RX) d'un message (MSG) provenant du dispositif de gestion de comptes utilisateurs (MG_PROV), ledit message (MSG) comprenant :
- un compte utilisateur créé (CPT) par le dispositif de gestion de comptes utilisateurs (MG_PROV) pour une application donnée (APP) ;
- une référence utilisateur (U_SSO) du dispositif de signature unique (SSO) correspondant au compte utilisateur créé (CPT) ;
- une référence application (APP_SSO) du dispositif de signature unique (SSO) correspondant à l'application (APP) pour laquelle le compte utilisateur (CPT) a été créé.
- une unité de mise en correspondance secondaire (M_ASSOC2) du compte utilisateur reçu (CPT) avec la référence utilisateur reçue (U_SSO) et pour l'application (APP) dont la référence application (APP_SSO) a été reçue.

13. Dispositif de signature unique (SSO) selon la revendication précédente, selon lequel la base de référence utilisateurs (U_REF) est une base d'utilisateurs (U_BDD) d'une application (APP) provisionnée par le dispositif de gestion de comptes utilisateurs (MG_PROV).

14. Dispositif de signature unique (SSO) selon la revendication 12, selon lequel la base de référence utilisateurs (U_REF) est une source d'identités (S_ID) utilisée comme source pour un annuaire d'identité (A_ID) du dispositif de gestion de comptes utilisateurs (MG_PROV), ledit annuaire d'identité (A_ID) comprenant des identifiants référents (UMA) relatifs aux utilisateurs (U) de la pluralité d'applications (APP).

15. Procédé d'alimentation d'une base (BDD_SSO) de signature unique gérée par un dispositif de signature unique (SSO), **caractérisé en ce qu'**il comporte les étapes de :
- créer une authentification primaire (CFP) pour chaque utilisateur (U) enregistré dans une base de référence utilisateurs (U_REF), ladite authentification primaire (CFP) permettant l'accès à la pluralité d'applications (APP) ;
- lire ladite base de référence utilisateurs (U_REF) comprenant des références utilisateurs (U_SSO) relatives aux utilisateurs (U) de la pluralité d'applications (APP) ; et
- recevoir un message (MSG) provenant du dispositif de gestion de comptes utilisateurs (MG_PROV), ledit message (MSG) comprenant :
- un compte utilisateur créé (CPT) par le dispositif de gestion de comptes utilisateurs (MG_PROV) pour une application donnée (APP) ;
- une référence utilisateur (U_SSO) du dispositif de signature unique (SSO) correspondant au compte utilisateur créé (CPT) ;
- une référence application (APP_SSO) du dispositif de signature unique (SSO) correspondant à l'application (APP) pour laquelle le compte utilisateur (CPT) a été créé.

16. Système de gestion (SYS) de comptes utilisateurs d'utilisateurs d'une pluralité d'applications, ledit système de gestion (SYS) étant apte à créer des comptes utilisateur (CPT) pour ladite pluralité d'applications (APP) et à permettre l'accès à au moins une application (APP) pour au moins un utilisateur (U) au moyen d'une authentification primaire (CFP), ledit système de gestion comprenant un dispositif de gestion de comptes utilisateurs selon l'une quelconque des revendications précédentes 1 à 8, et au moins un dispositif de signature unique (SSO) selon l'une quelconque des revendications précédentes 12 à 14.

17. Système de gestion (SYS) de comptes utilisateurs selon la revendication précédente, selon lequel il comprend une pluralité de dispositifs de signature unique (SSO).

18. Produit programme d'ordinateur (PG1) comportant une ou plusieurs séquences d'instructions exécutables par une unité de traitement d'information, l'exécution desdites séquences d'instructions permettant une mise en oeuvre du procédé de gestion de comptes utilisateurs selon l'une quelconque des revendications précédentes 9 à 11, lorsqu'il est chargé sur un ordinateur.

19. Produit programme d'ordinateur (PG2) comportant une ou plusieurs séquences d'instructions exécutables par une unité de traitement d'information, l'exécution desdites séquences d'instructions permettant une mise en oeuvre du procédé d'alimentation d'une base selon la revendication précédente 15, lorsqu'il est chargé sur un ordinateur.

## Patentansprüche

1. Verwaltungsvorrichtung (MG_PROV) für Nutzerkonten (CPT) von Nutzern (U) einer Vielzahl von Anwendungen (APP), die geeignet ist, mit wenigstens einer Vorrichtung für eine einzigartige Unterschrift (SSO) zusammenzuwirken, wobei die genannte einzigartige Unterschrift (SSO) geeignet ist, den Zugang zu wenigstens einer Anwendung (APP) für wenigstens einen Nutzer (U) mittels einer primären Authentifizierung (CFP) zu erlauben, wobei die genannte Verwaltungsvorrichtung (MG_PROV) umfasst:
- eine primäre Leseeinheit (M_RD11) eines Identitätsverzeichnisses (A_ID), umfassend verweisende Kennungen (UMA) relativ zu Nutzern (U) der Vielzahl von Anwendungen (APP);
- eine primäre Einheit zum Anlegen (M_CR11) wenigstens eines Nutzerkontos (CPT) für eine Anwendung (APP);
- eine Bestimmungseinheit (M_IDT) einer Nutzerreferenzbank (U_REF), die von der Vorrichtung für eine einzigartige Unterschrift (SSO) genutzt wird;
und **dadurch gekennzeichnet, dass** sie umfasst:
- eine Einheit zum primären Abgleich (M_ASSOC1) des mit der referenzgebenden Kennung (UMA) des genannten Nutzers (U), für den das Nutzerkonto (CPT) angelegt wurde, angelegten Nutzerkontos (CPT);
- eine sekundäre Leseeinheit (M_RD12) einer Anwendungsentsprechungskennung (APP_TAB), umfassend die Kennungen der Anwendungen (APP_ID), die sie bereitstellt, und die Anwendungsreferenzen, die den Anwendungen entsprechen (APP_SSO), die durch wenigstens eine Vorrichtung für eine einzigartige Unterschrift (SSO) verwaltet werden;
- eine Versandeinheit (M_TX) zu der genannten Vorrichtung für eine einzigartige Unterschrift (SSO) einer Nachricht (MSG), umfassend:
- das angelegte Nutzerkonto (CPT);
- eine Nutzerreferenz (U_SSO) der Vorrichtung für eine einzigartige Unterschrift (SSO), die dem angelegten Nutzerkonto (CPT) entspricht;
- eine Anwendungsreferenz (APP_SSO) der Vorrichtung für eine einzigartige Unterschrift (SSO), die der Anwendung (APP) entspricht, für die das Nutzerkonto (CPT) angelegt wurde.

2. Verwaltungsvorrichtung für Nutzerkonten (CPT) gemäß Anspruch 1, gemäß der sie darüber hinaus eine Konfigurationseinheit (MG;CFG) einer Nutzergruppe (U_GP) des Identitätsverzeichnisses (A_ID) umfasst, das geeignet ist, anzugeben:
- die Vorrichtung für eine einzigartige Unterschrift (SSO), die dieser Nutzergruppe (U_GP) zugeordnet ist; und
- die Nutzerreferenzbank (U_REF), die von der genannten Vorrichtung für eine einzigartige Unterschrift (SSO) verwendet wird, wobei die genannte Nutzerreferenzbank (U_REF) die Nutzerreferenzen (U_SSO) umfasst.

3. Verwaltungsvorrichtung für Nutzerkonten (CPT) gemäß Anspruch 1, gemäß der die Identifizierungseinheit (M_IDT) geeignet ist, die Vorrichtung für eine einzigartige Unterschrift (SSO) abzufragen, um die Nutzerreferenzbank (U_REF) zu erfahren, die die genannte Vorrichtung für eine einzigartige Unterschrift (SSO) verwendet.

4. Verwaltungsvorrichtung für Nutzerkonten (CPT) gemäß einem der voranstehenden Ansprüche, gemäß der sie darüber hinaus eine Anmeldeeinheit (M_REG) jeder Anwendung (APP) umfasst, die von der Vorrichtung für eine einzigartige Unterschrift (SSO) in der Anwendungsentsprechungstabelle (APP_TAB) verwendet wird.

5. Verwaltungsvorrichtung für Nutzerkonten (CPT) gemäß einem der voranstehenden Ansprüche, gemäß der sie darüber hinaus eine Zuordnungseinheit (M_ACC1) von Rechten (RGT) zu dem angelegten Nutzerkonto (CPT) ausgehend von einem Verwaltungssystem einer zentralisierten Politik (RBAC) umfasst.

6. Verwaltungsvorrichtung für Nutzerkonten (CPT) gemäß einem der voranstehenden Ansprüche, gemäß der die Nachricht (MSG) darüber hinaus dem angelegten Nutzerkonto (CPT) zugeordnete Rechte (RGT) umfasst, um den Betriebsmodus der Vorrichtung für eine einzigartige Unterschrift (SSO) für dieses Nutzerkonto (CPT) zu definieren.

7. Verwaltungsvorrichtung für Nutzerkonten (CPT) gemäß einem der voranstehenden Ansprüche, gemäß der sie darüber hinaus eine Einheit zum Anlegen (M_CR12) der verweisenden Kennungen (UMA) der Nutzer des Identitätsverzeichnisses (A_ID) umfasst.

8. Verwaltungsvorrichtung für Nutzerkonten (CPT) gemäß einem der voranstehenden Ansprüche, gemäß dem es darüber hinaus eine Synchronisationseinheit (M_SYNC) der verweisenden Kennungen (UMA) der Nutzer des Identitätsverzeichnisses (A_ID) ausgehend von einer Identitätsquelle (S_ID) umfasst.

9. Verwaltungsvorrichtung für Nutzerkonten (CPT) von Nutzern (U) einer Vielzahl von Anwendungen (APP), umfassend die Stufen:
- Lesen eines Identitätsverzeichnisses (A_ID), umfassend die verweisenden Kennungen (UMA) relativ zu den Nutzern (U) der Vielzahl der Anwendungen (APP);
- Anlegen wenigstens eines Nutzerkontos (CPT) für eine Anwendung (APP);
- Bestimmung wenigstens einer Nutzerreferenzbank (U_REF), die von wenigstens einer Vorrichtung für eine einzigartige Unterschrift (SSO) verwendet wird;
und **dadurch gekennzeichnet, dass** sie die zusätzlichen Stufen umfasst:
- Abgleich (M_ASSOC1) des angelegten Nutzerkontos (CPT) mit der verweisenden Kennung (UMA) des genannten Nutzers (U);
- Versand (M_TX) einer Nachricht (MSG) an die genannte Vorrichtung für eine einzigartige Unterschrift (SSO), umfassend:
- das angelegte Nutzerkonto (CPT);
- eine Nutzerreferenz (U_SSO) der Vorrichtung für eine einzigartige Unterschrift (SSO), die dem angelegten Nutzerkonto entspricht (CPT);
- eine Anwendungsreferenz (APP_SSO) der Vorrichtung für eine einzigartige Unterschrift (SSO), die der Anwendung (APP) entspricht, für die das Nutzerkonto angelegt wurde.

10. Verwaltungsverfahren für Nutzerkonten (CPT) gemäß dem voranstehenden Anspruch, gemäß dem es darüber hinaus eine Konfigurationsstufe einer Nutzergruppe (U_GP) des Identitätsverzeichnisses (A_ID) umfasst mit der Angabe:
- der Vorrichtung für eine einzigartige Unterschrift (SSO), die dieser Nutzergruppe (U_GP) zugeordnet ist; und
- die Nutzerreferenzbank (U_REF), die von der genannten Vorrichtung für eine einzigartige Unterschrift (SSO) verwendet wird, wobei die genannte Nutzerreferenzbank (U_REF) die Nutzerreferenzen (U_SSO) umfasst.

11. Verwaltungsverfahren für Nutzerkonten (CPT) gemäß Anspruch 10 oder Anspruch 11, gemäß dem es darüber hinaus eine Anmeldestufe jeder von der Vorrichtung für eine einzigartige Unterschrift (SSO) verwendeten Anwendung in der Anwendungsentsprechungstabelle (APP_TAB) umfasst.

12. Vorrichtung für eine einzigartige Unterschrift (SSO), die geeignet ist, den Zugriff auf wenigstens eine Anwendung (APP) für wenigstens einen Nutzer (U) mittels einer primären Authentifizierung (CFP) zu erlauben und die geeignet ist, mit einer Verwaltungsvorrichtung für Nutzerkonten (CPT) von Nutzern einer Vielzahl von Anwendungen (APP) zusammenzuwirken, **dadurch gekennzeichnet, dass** sie umfasst:
- eine Einheit zum Anlegen (M_CR2) einer primären Authentifizierung (CFP) für jeden Nutzer (U), der in einer Nutzerreferenzbank (U_REF) angemeldet ist, wobei die primäre Authentifizierung (CFP) den Zugriff auf eine Vielzahl von Anwendungen (APP) zulässt;
- eine primäre Leseeinheit (M_RD21) der genannten Nutzerreferenzbank (U_REF), umfassend Nutzerreferenzen (U_SSO) relativ zu den Nutzern (U) der Vielzahl von Anwendungen (APP);
- eine Empfangseinheit (M_RX) einer Nachricht (MSG), die aus der Verwaltungsvorrichtung für Nutzerkonten (MG_PROV) stammt, wobei die genannte Nachricht (MSG) umfasst:
- ein durch die Verwaltungsvorrichtung für Nutzerkonten (MG_PROV) für eine bestimmte Anwendung (APP) angelegtes Nutzerkonto (CPT);
- eine Nutzerreferenz (U_SSO) der Vorrichtung für eine einzigartige Unterschrift (SSO), die dem angelegten Nutzerkonto (CPT) entspricht);
- eine Anwendungsreferenz (APP_SSO) der Vorrichtung für eine einzigartige Unterschrift (SSO), die der Anwendung (APP) entspricht, für die das Nutzerkonto angelegt wurde;
- eine sekundäre Abgleichseinheit (M_ASSOC2) des erhaltenen Nutzerkontos (CPT) mit der erhaltenen Nutzerreferenz (U_SSO) und für die Anwendung (APP), deren Anwendungsreferenz (APP_SSO) erhalten wurde.

13. Vorrichtung für eine einzigartige Unterschrift (SSO) gemäß dem voranstehenden Anspruch, gemäß dem die Nutzerreferenzbank (U_REF) eine Nutzerbank (U_BDD) einer Anwendung (APP) ist, die von der Verwaltungsvorrichtung für Nutzerkonten (MG_PROV) bereitgestellt wird.

14. Vorrichtung für eine einzigartige Unterschrift (SSO) gemäß Anspruch 12, gemäß der die Nutzerreferenzbank (U_REF) eine Identitätsquelle (S_ID) ist, die als Quelle für ein Identitätsverzeichnis (A_ID) der Verwaltungsvorrichtung für Nutzerkonten (MG_PROV) verwendet wird, wobei das genannte Identitätsverzeichnis (A_ID) verweisende Kennungen (UMA) relativ zu den Nutzern (U) der Vielzahl von Anwendungen (APP) umfasst.

15. Versorgungsverfahren einer Bank (BDD_SSO) mit einer einzigartigen Unterschrift, die von einer Vorrichtung für eine einzigartige Unterschrift (SSO) verwaltet wird, **dadurch gekennzeichnet, dass** die Stufen umfasst:
- Anlegen einer primären Authentifizierung (CFP) für jeden Nutzer (U), der in einer Nutzerreferenzbank (U_REF) eingetragen ist, wobei die genannte primäre Authentifizierung (CFP) den Zugriff auf eine Vielzahl von Anwendungen (APP) erlaubt;
- Lesen der genannten Nutzerreferenzbank (U_REF), umfassend Nutzerreferenzen (U_SSO) relativ zu den Nutzern (U) der Vielzahl von Anwendungen (APP); und
- Empfang einer Nachricht (MSG), die aus der Verwaltungsvorrichtung für Nutzerkonten (MG_PROV) stammt, wobei die genannte Nachricht (MSG) umfasst:
- ein von der Verwaltungsvorrichtung von Nutzerkonten (MG_PROV) angelegtes Nutzerkonto für eine bestimmte Anwendung (APP);
- eine Nutzerreferenz (U_SSO) der Vorrichtung für eine einzigartige Unterschrift (SSO), die dem angelegten Nutzerkonto (CPT) entspricht;
- eine Anwendungsreferenz (APP_SSO) der Vorrichtung für eine einzigartige Unterschrift (SSO),die der Anwendung (APP) entspricht, für die das Nutzerkonto (CPT) angelegt wurde.

16. Verwaltungssystem (SYS) für Nutzerkonten von Nutzern einer Vielzahl von Anwendungen, wobei das genannte Verwaltungssystem (SYS) geeignet ist, Nutzerkonten (CPT) für die genannte Vielzahl von Anwendungen (APP) anzulegen und den Zugriff auf wenigstens eine Anwendung (APP) für wenigstens einen Nutzer (U) mittels einer primären Authentifizierung (CFP) zu erlauben, wobei das genannte Verwaltungssystem eine Verwaltungsvorrichtung für Nutzerkonten gemäß einem der voranstehenden Ansprüche 1 bis 8 und wenigstens eine Vorrichtung für eine einzigartige Unterschrift (SSO) gemäß einem der voranstehenden Ansprüche 12 bis 14 umfasst.

17. Verwaltungssystem (SYS) für Nutzerkonten gemäß dem voranstehenden Anspruch, gemäß dem es eine Vielzahl von Vorrichtungen für einzigartige Unterschriften (SSO) umfasst.

18. Computerprogrammprodukt (PG1), umfassend eine oder mehrere Anweisungssequenzen, die durch eine Informationsverarbeitungseinheit ausführbar sind, wobei die Ausführung der genannten Anweisungssequenzen eine Umsetzung des Verwaltungsverfahrens für Nutzerkonten gemäß einem der voranstehenden Ansprüche 9 bis 11 zulässt, wenn es auf einen Computer geladen ist.

19. Computerprogrammprodukt (PG2), umfassend eine oder mehrere Anweisungssequenzen, die durch eine Informationsverarbeitungseinheit ausführbar sind, wobei die Ausführung der genannten Anweisungssequenzen eine Umsetzung des Versorgungsverfahrens einer Bank gemäß dem voranstehenden Anspruch 15 erlaubt, wenn es auf einen Computer geladen ist.

## Claims

1. Device for managing (MG_PROV) the user (U) accounts (CPT) of a plurality of applications (APP) that can cooperate with at least one single sign-on device (SSO), said single sign-on device (SSO) that can provide access to at least one application (APP) for at least one user (U) by means of a primary authentication (CFP), said management device (MG_PROV) comprising:
- a unit (M_RD11) for the primary reading of an identity directory (A_ID) comprising referrer identifiers (UMA) relating to the users (U) of the plurality of applications (APP);
- a unit (M_CR11) for the primary creation of at least one user account (CPT) for an application (APP);
- a unit (M_IDT) for determining a reference user database (U_REF) used by the single sign-on device (SSO);
and **characterised in that** it comprises:
- a unit (M_ASSOC1) for the primary association of the created user account (CPT) with the referrer identifier (UMA) of said user (U) for which the user account (CPT) was created;
- a unit (M_RD12) for the secondary reading of an application association table (APP_TAB) comprising the identifiers of the applications (APP_ID) that it provides and the corresponding application references (APP_SSO) of the applications managed by at least one single sign-on device (SSO);
- a unit (M_TX) for sending to said single sign-on device (SSO) a message (MSG) containing:
- the created user account (CPT);
- a user reference (U_SSO) of the single sign-on device (SSO) corresponding to the user account created (CPT);
- a reference application (APP_SSO) of the single sign-on device (SSO) corresponding to the application (APP) for which the user account (CPT) was created.

2. Device for managing user accounts (CPT) according to claim 1, according to which it further comprises a unit (MG_CFG) for the configuration of a group of users (U_GP) of the identity directory (A_ID) that can indicate:
- what is the single sign-on device (SSO) that is associated with this group of users (U_GP); and
- what is the reference user database (U_REF) that is used by said single sign-on device (SSO), with said reference user database (U_REF) comprising the user references (U_SSO).

3. Device for managing user accounts (CPT) according to claim 1, according to which the unit for identification (MJDT) is able to interrogate the single sign-on device (SSO) in order to know the reference user database (U_REF) that said single sign-on device (SSO) is using.

4. Device for managing user accounts (CPT) as claimed in any preceding claim, according to which it further comprises a unit (M_REG) for recording any application (APP) used by the single sign-on device (SSO) in the application association table (APP_TAB).

5. Device for managing user accounts (CPT) as claimed in any preceding claim, according to which it further comprises a unit (M_ACC1) for granting rights (RGT) to the user account (CPT) created using a centralised policy management system (RBAC).

6. Device for managing user accounts (CPT) as claimed in any preceding claim, according to which the message (MSG) further comprises rights (RGT) granted to the user account (CPT) created in order to define the operating mode of the single sign-on device (SSO) for this user account (CPT).

7. Device for managing user accounts (CPT) as claimed in any preceding claim, according to which it further comprises a unit (M_CR12) for creating referrer identifiers (UMA) of the users of the identity directory (A_ID).

8. Device for managing user accounts (CPT) as claimed in any preceding claim, according to which it further comprises a unit (M_SYNC) for synchronising referrer identifiers (UMA) of the users of the identity directory (A_ID) using a source of identity (S_ID),

9. Method for managing user accounts (CPT) of users (U) of a plurality of applications (APP) comprising the steps of:
- reading an identity directory (A_ID) comprising referrer identifiers (UMA) relating to the users (U) of the plurality of applications (APP);
- creating at least one user account (CPT) for an application (APP);
- determining at least one reference user database (U_REF) used by at least one single sign-on device (SSO);
and **characterised in that** it comprises the additional steps of:
- associating (M_ASSOC1) the created user account (CPT) with the referrer identifier (UMA) of said user (U) ;
- sending (M_TX) to said single sign-on device (SSO) a message (MSG) containing:
- the created user account (CPT);
- a user reference (U_SSO) of the single sign-on device (SSO) corresponding to the user account created (CPT);
- a reference application (APP_SSO) of the single sign-on device (SSO) corresponding to the application (APP) for which the user account (CPT) was created.

10. Method for managing user accounts (CPT) as claimed in the preceding claim, according to which it further comprises a step of configuring a group of users (U_GP) of the identity directory (A_ID) by indicating:
- what is the single sign-on device (SSO) that is associated with this group of users (U_GP); and
- what is the reference user database (U_REF) which is used by said single sign-on device (SSO), with said reference user database (U_REF) comprising the user references (U_SSO).

11. Method for managing user accounts (CPT) according to claim 10 or claim 11, according to which it further comprises a step of recording any application used by the single sign-on device (SSO) in the application association table (APP_TAB).

12. Single sign-on device (SSO) that can provide access to at least one application (APP) for at least one user (U) by means of a primary authentication (CFP) and being able to cooperate with a device for managing user accounts (CFT) of the users of a plurality of applications (APP), **characterised in that** it comprises:
- a unit (M_CR2) for creating a primary authentication (CFP) for each user (U) recorded in a reference user database (U_REF), with said primary authentication (CFP) allowing access to the plurality of applications (APP);
- a unit (M_RD21) for the primary reading said reference user database (U_REF) comprising user references (U_SSO) relating to the users (U) of the plurality of applications (APP);
- a unit (M_RX) for receiving a message (MSG) coming from the device for managing user accounts (MG_PROV), said message (MSG) containing:
- a user account (CPT) created by the device for managing user accounts (MG_PROV) for a given application (APP);
- a user reference (U_SSO) of the single sign-on device (SSO) corresponding to the user account created (CPT);
- a reference application (APP_SSO) of the single sign-on device (SSO) corresponding to the application (APP) for which the user account (CPT) was created.
- unit (M_ASSOC2) for the secondary association of the user account received (CPT) with the user reference received (U_SSO) and for the application (APP) for which the application reference (APP_SSO) was received.

13. Single sign-on device (SSO) as claimed in the preceding claim, according to which the reference user database (U_REF) is a user database (U_BDD) of an application (APP) provided by the device for managing user accounts (MG_PROV).

14. Single sign-on device (SSO) according to claim 12, according to which the reference user database (U_REF) is a source of identities (S_ID) used as a source for an identity directory (A_ID) of the device for managing user accounts (MG_PROV), said identity directory (A_ID) comprising referrer identifiers (UMA) relating to the users (U) of the plurality of applications (APP).

15. Method for supplying a single sign-on database (BDD_SSO) managed by a single sign-on device (SSO), **characterised in that** it comprises the steps of:
- creating a primary authentication (CFP) for each user (U) recorded in a reference user database (U_REF), said primary authentication (CFP) allowing access to the plurality of applications (APP);
- reading said reference user database (U_REF) comprising user references (U_SSO) relating to the users (U) of the plurality of applications (APP); and
- receiving a message (MSG) coming from the device for managing user accounts (MG_PROV), said message (MSG) comprising:
- a user account (CPT) created by the device for managing user accounts (MG_PROV) for a given application (APP);
- a user reference (U_SSO) of the single sign-on device (SSO) corresponding to the user account created (CPT);
- a reference application (APP_SSO) of the single sign-on device (SSO) corresponding to the application (APP) for which the user account (CPT) was created.

16. System (SYS) for managing user accounts of the users of a plurality of applications, said system (SYS) for managing able to create user accounts (CPT) for said plurality of applications (APP) and to allow access to at least one application (APP) for at least one user (U) by means of a primary authentication (CFP), said system for managing comprising a device for managing user accounts as claimed in any preceding claim 1 to 8, and at least one single sign-on device (SSO) as claimed in any preceding claim 12 to 14.

17. System (SYS) for managing user accounts as claimed in the preceding claim, according to which it comprises a plurality of single sign-on devices (SSO).

18. Computer programme product (PG1) comprising one or several sequences of instructions that can be executed by an information processing unit, with the execution of said sequences of instructions allowing for an implementation of the method for managing user accounts as claimed in any preceding claim 9 to 11, when it is loaded on a computer.

19. Computer programme product (PG2) comprising one or several sequences of instructions that can be executed by an information processing unit, with the execution of said sequences of instructions allowing for an implementation of the method of supplying a database as claimed in the preceding claim 15, when it is loaded on a computer.
